# EUROPÄISCHE PATENTSCHRIFT

(11) **EP 2 592 519 B1**
(45) Veröffentlichungstag und Bekanntmachung des Hinweises auf die Patenterteilung: **30.04.2014**
(21) Anmeldenummer: 11009009.9
(22) Anmeldetag: 12.11.2011
(51) Int. Cl.: G05D 16/20

(54) **Druckregeleinrichtung sowie Verfahren zum Betreiben einer Druckregeleinrichtung**
Pressure regulation device and method for operating a pressure regulation device
Dispositif de réglage de pression et procédé de fonctionnement d'un dispositif de réglage de pression

(43) Veröffentlichungstag der Anmeldung: 15.05.2013
(73) Patentinhaber: FESTO AG & Co. KG, 73734 Esslingen (DE)
(72) Erfinder: Neef, Bodo, 73765 Neuhausen (DE); Schill, Sebastian, 72581 Dettingen/Erms (DE)
(74) Vertreter: Abel, Martin

(56) Entgegenhaltungen:
- EP-A1- 1 832 950
- EP-B1- 0 726 511
- JP-A- 5 158 552
- US-A- 3 354 894

## Beschreibung

Die Erfindung betrifft eine Druckregeleinrichtung, mit einem Druckregelventil, das ein Ventilgehäuse mit einem zur Druckmittelzufuhr dienenden Primäranschluss, einem druckgeregelten Sekundäranschluss zur Verbindung mit einem Verbraucher und einen Entlüftungsanschluss aufweist, wobei zwischen dem Sekundäranschluss und dem Primäranschluss eine von einem ersten Ventilsitz umrahmte erste Überströmöffnung und zwischen dem Sekundäranschluss und dem Entlüftungsanschluss eine von einem zweiten Ventilsitz umrahmte zweite Überströmöffnung angeordnet ist, wobei dem ersten Ventilsitz ein federnd in Richtung einer am ersten Ventilsitz anliegenden Schließstellung vorgespanntes erstes Verschlussglied und dem zweiten Ventilsitz ein federnd in Richtung einer am zweiten Ventilsitz anliegenden Schließstellung vorgespanntes zweites Verschlussglied gegenüberliegt, wobei beide Verschlussglieder zu einer bezüglich des Ventilgehäuses beweglichen Regelungseinheit gehören, die außerdem ein relativ zu den beiden Verschlussgliedern bewegliches und durch Beeinflussung mittels eines Steuerdruckes zu einer Regelungsbewegung relativ zum Ventilgehäuse antreibbares Betätigungsglied enthält, durch das jedes Verschlussglied in mindestens eine vom zugeordneten Ventilsitz abgehobene Offenstellung bewegbar ist.

Die Erfindung betrifft ferner ein Verfahren zum Betreiben einer solchen Druckregeleinrichtung.

Eine derartige Druckregeleinrichtung ist aus der EP 0 726 511 B1 bekannt. Kernbestandteil dieser Druckregeleinrichtung ist ein proportional betätigbares Druckregelventil mit einer bezüglich eines Ventilgehäuses beweglichen Regelungseinheit, die ein stößelartiges Betätigungsglied und zwei darauf sitzende, relativ zu dem Betätigungsglied bewegliche Verschlussglieder enthält. Jedes Verschlussglied ist mittels einer Federeinrichtung in eine Schließstellung zur Anlage an einem gegenüberliegenden Ventilsitz vorgespannt, wobei ein erster Ventilsitz eine zwischen einem Primäranschluss und einem Sekundäranschluss verlaufende erste Überströmöffnung umrahmt und ein zweiter Ventilsitz eine den Sekundäranschluss mit einem Entlüftungsanschluss verbindende zweite Überströmöffnung umrahmt. Im Betrieb der Druckregeleinrichtung liegt am Primäranschluss ein unter einem Primärdruck stehendes fluidisches Druckmedium an, das an dem Sekundäranschluss mit einem regelbaren Sekundärdruck an einen Verbraucher ausgebbar ist. Die Höhe des Sekundärdruckes kann durch die Positionierung der Regelungseinheit auf einen konstanten Druckwert eingeregelt werden, wobei die Möglichkeit besteht, mit einem Steuerdruck auf das Betätigungsglied einzuwirken, so dass dieses eine Regelungsbewegung ausführt, im Rahmen derer es dafür sorgt, dass die beiden Verschlussglieder jeweils wahlweise in eine die zugeordnete Überströmöffnung verschließende Schließstellung oder in mindestens eine vom zugeordneten Ventilsitz abgehobene und dadurch die zugeordnete Überströmöffnung für ein hindurchströmendes Druckmedium freigebende Offenstellung bewegt werden.

Wenn bei dem bekannten Ventil eine Fehlfunktion auftritt, die ein an sich gewolltes Schließen des die Verbindung zwischen dem Primäranschluss und dem Sekundäranschluss steuernden ersten Verschlussgliedes verhindert, kann dies zu Funktionsbeeinträchtigungen oder gar zu Gefährdungssituationen bei einem sekundärseitig angeschlossenen Verbraucher führen.

Der Erfindung liegt die Aufgabe zugrunde, Maßnahmen zu treffen, durch die sich mit einer Fehlfunktion des ersten Verschlussgliedes verbundene Beeinträchtigungen auf Seiten des angeschlossenen Verbrauchers vermeiden lassen.

Zur Lösung dieser Aufgabe ist bei einer Druckregeleinrichtung der eingangs genannten Art vorgesehen, dass die Regelungseinheit zusätzlich zu den beiden Verschlussgliedern ein ortsfest an dem Betätigungsglied angeordnetes und dessen Regelungsbewegung mitmachendes Drosselglied aufweist, das in einer dem ersten Verschlussglied die Einnahme seiner Schließstellung erlaubenden Stellung des Betätigungsgliedes eine den Strömungsquerschnitt zwischen dem Primäranschluss und dem Sekundäranschluss im Vergleich zu der durch das Betätigungsglied hervorrufbaren maximalen Offenstellung des ersten Verschlussgliedes auf einen Drosselspalt verengende Drosselstellung einnimmt.

Die Druckregeleinrichtung verfügt somit zusätzlich über ein integriertes Drosselventil, das nur wirksam sein kann, wenn das Betätigungsglied im Rahmen seiner Regelungsbewegung in eine Stellung verlagert wurde, in der es dem ersten Verschlussglied die Einnahme seiner Schließstellung ermöglicht. In dieser Betriebsstellung des Betätigungsgliedes sollte das federnd in die Schließstellung vorgespannte erste Verschlussglied bei korrekter Funktion des Druckregelventils seine Schließstellung einnehmen, um eine weitere Fluidzufuhr zum Sekundäranschluss zu verhindern. Aufgrund von Fehlfunktionen, beispielsweise bei einem Verklemmen des in der Offenstellung befindlichen ersten Verschlussgliedes oder bei einem Bruch einer dieses erste Verschlussglied in die Schließstellung vorspannenden Federeinrichtung, kann es jedoch geschehen, dass das erste Verschlussglied nicht in die Schließstellung umschaltet, obwohl es dies eigentlich tun sollte und aufgrund einer entsprechenden Schaltstellung des Betätigungsgliedes auch möglich wäre. In einem solchen Fall tritt die Wirkung des an dem Betätigungsglied angeordneten Drosselgliedes zutage, das unabhängig vom zugeordneten ersten Verschlussglied den Strömungsquerschnitt zwischen dem Primäranschluss und dem Sekundäranschluss so verengt, dass sich ein Drosselspalt ergibt, der nur noch einen sehr begrenzten Fluiddurchsatz zulässt. Durch entsprechende Auslegung kann leicht erreicht werden, dass die durch den Drosselspalt hindurch noch mögliche Strömungsrate ein für den am Sekundäranschluss angeschlossenen Verbraucher unbedenklich niedriges Niveau aufweist. Es besteht darüber hinaus die vorteilhafte Möglichkeit, durch Überwachung des Sekundärdruckes anhand des im Falle der genannten Fehlfunktion sekundärseitig auftretenden geringen Restdruckes eine Fehlfunktion zu detektieren und umgehend Maßnahmen einzuleiten, um Folgeschäden zu vermeiden. Beispielsweise kann dann die Druckversorgung des Primäranschlusses deaktiviert werden.

Ein vorteilhaftes Verfahren zum Betreiben einer solchen Druckregeleinrichtung besteht darin, dass unter Verwendung einer elektronischen Steuereinrichtung auf der Grundlage eines vorgegebenen oder vorgebbaren Sekundärdruck-Sollwertes und eines am Sekundäranschluss herrschenden Sekundärdruck-Istwertes ein zum Antreiben des Betätigungsgliedes genutzter Steuerdruck generiert wird, wobei ein elektrisches Meldesignal erzeugt wird, wenn der Sekundärdruck einen vorgegebenen oder vorgebbaren Restdruckwert nicht unterschreitet, obwohl das Betätigungsglied - insbesondere durch Verringerung des Steuerdruckes auf Atmosphärendruck - hinsichtlich seines Steuerdruckes derart angesteuert ist, dass es in eine dem ersten Verschlussglied die Einnahme seiner Schließstellung ermöglichende Stellung umschaltbar oder umgeschaltet ist.

Auf diese Weise kann allein aufgrund von ermittelten beziehungsweise überwachten Druckwerten auf eine Fehlersituation seitens des ersten Verschlussgliedes geschlossen werden. Kostenaufwendige und fehleranfällige elektrische Sensormittel zur Positionsüberwachung von Komponenten der Regelungseinheit werden mithin nicht benötigt.

Vorteilhafte Weiterbildungen der Erfindung gehen aus den Unteransprüchen hervor.

Es ist von Vorteil, wenn das Drosselglied derart an dem Betätigungsglied angeordnet ist, dass es in der die Offenstellung des ersten Verschlussgliedes vorgebenden Stellung des Betätigungsgliedes außerhalb der ersten Überströmöffnung liegt und in der Drosselstellung zumindest teilweise und zweckmäßigerweise vollständig in die Überströmöffnung eintaucht. Das in der Drosselstellung noch vom Primäranschluss zum Sekundäranschluss überströmende Druckmedium strömt mithin radial außen an dem Drosselglied vorbei und durch einen ringförmigen Drosselspalt hindurch, der insbesondere konzentrisch radial zwischen dem Drosselglied und der das Drosselglied umschließenden Umfangswand der ersten Überströmöffnung gebildet ist.

Vorzugsweise ist das Drosselglied als von dem Betätigungsglied radial abstehender Ringvorsprung ausgebildet, der auch als Ringbund bezeichnet werden könnte. Er hat zweckmäßigerweise die flache Form einer Ringscheibe.

Grundsätzlich besteht die Möglichkeit, das Drosselglied als separate Komponente am Betätigungsglied anzubringen. Als zweckmäßiger wird jedoch eine Bauform angesehen, bei der das Drosselglied einstückig mit dem Betätigungsglied ausgebildet ist und sich folglich unmittelbar bei der Herstellung des Betätigungsgliedes anformen lässt.

Das Betätigungsglied verfügt zweckmäßigerweise über ein Anschlagglied, das bei einer entsprechenden Regelungsbewegung des Betätigungsgliedes so auf das erste Verschlussglied einwirkt, dass dieses entgegen der einwirkenden Federkraft in die Offenstellung verlagert wird. Ein weiteres solches Anschlagglied ist zweckmäßigerweise dem zweiten Verschlussglied zugeordnet, um dieses bei entsprechender Regelungsbewegung in seine Offenstellung zu bewegen. Das dem ersten Verschlussglied zugeordnete Anschlagglied kann zusätzlich zu dem für die geschilderte Drosselungsfunktion verantwortlichen Drosselglied vorhanden sein. Als besonders zweckmäßig wird eine Ausgestaltung angesehen, bei der das Anschlagglied und das Drosselglied als Baueinheit ausgebildet sind und mithin das Anschlagglied auch als Drosselglied fungiert und umgekehrt.

Vorzugsweise ist das Drosselglied so ausgebildet und derart an den Querschnitt der zugeordneten ersten Überströmöffnung angepasst, dass der am Sekundäranschluss anliegende Sekundärdruck dann, wenn das erste Verschlussglied in eine Offenstellung verlagert ist und außerdem das Drosselglied die Drosselstellung einnimmt und dabei gleichzeitig das erste Verschlussglied sich in der maximalen Offenstellung befindet, maximal 10 % des am Primäranschluss anstehenden Primärdruckes beträgt, wobei der Sekundärdruck zweckmäßigerweise 1 bar nicht überschreitet.

Die Druckregeleinrichtung ist zweckmäßigerweise mit einer elektronischen Steuereinrichtung ausgestattet, die ausgebildet ist, um ein elektrisches Meldesignal hervorzurufen, wenn der an dem Sekundäranschluss herrschende Sekundärdruck-Istwert einen vorgegebenen, über dem Atmosphärendruck liegenden Restdruckwert nicht unterschreitet, obwohl das Betätigungsglied durch einen insbesondere auf Nullniveau bzw. Atmosphärenniveau liegenden Steuerdruck beaufschlagt ist, der ein Umschalten des Betätigungsgliedes in eine dem ersten Verschlussglied die Einnahme seiner Schließstellung ermöglichende Stellung hervorruft. Das Meldesignal kann beispielsweise als optisches oder akustisches Warnsignal ausgegeben werden und/oder kann genutzt werden, um Folgeaktionen zu initiieren, beispielsweise ein komplettes Absperren eines dem Primäranschluss den Primärdruck liefernden vorgeschalteten Hauptventils.

Die Druckregeleinrichtung enthält zweckmäßigerweise eine Sekundärdruck-Sensoreinrichtung, die den am Sekundäranschluss herrschenden Sekundärdruck erfasst. Mit Hilfe einer solchen Sekundärdruck-Sensoreinrichtung kann mithin der Sekundärdruck-Istwert überwacht werden, und zwar zum einen zur Ausführung der normalen Regelungsfunktion der Druckregeleinrichtung und zum anderen auch zur Überwachung in Bezug auf einen Fehlerfall, in dem das Drosselglied des Betätigungsgliedes wirksam wird.

Die Druckregeleinrichtung enthält zweckmäßigerweise eine elektronische Steuereinrichtung, an die die Sekundärdruck-Sensoreinrichtung angeschlossen ist.

Vorzugsweise enthält die Sekundärdruck-Sensoreinrichtung zwei funktionell parallelgeschaltete Drucksensoren, so dass eine Redundanz gegeben ist und selbst bei einem Ausfall eines Drucksensors weiterhin eine präzise Drucküberwachung des Sekundärdruckes gewährleistet ist.

Die Druckregeleinrichtung ist vorzugsweise mit einer Primärdruck-Sensoreinrichtung ausgestattet, die den am Primäranschluss herrschenden Primärdruck erfasst und die vorzugsweise an eine elektronische Steuereinrichtung der Druckregeleinrichtung angeschlossen ist, die zweckmäßigerweise bei der Generierung des das Betätigungsglied antreibenden Steuerdruckes mitwirkt.

Zur Bereitstellung des das Betätigungsglied beaufschlagenden Steuerdruckes enthält die Druckregeleinrichtung zweckmäßigerweise eine elektrisch betätigbare Vorsteuerventileinrichtung, die auslassseitig wirkungsmäßig mit dem Betätigungsglied verbunden ist. Der Einlass der Vorsteuerventileinrichtung ist zweckmäßigerweise direkt mit dem Primäranschluss des Druckregelventils verbunden, so dass ein interner Druckabgriff zur Speisung der Vorsteuerventileinrichtung möglich ist, da auf externe Fluidschläuche verzichtet werden kann.

Das Druckregelventil verfügt zweckmäßigerweise über eine interne Antriebskammer, die von einer mit dem Betätigungsglied antriebsmäßig gekoppelten beweglichen Antriebswand begrenzt ist und mit einem Steuerkanal kommuniziert, durch den hindurch in die Antriebskammer der für den Antrieb des Betätigungsgliedes gewünschte Steuerdruck zuführbar ist. Die Vorsteuerventileinrichtung verfügt insbesondere über eine an den Steuerkanal angeschlossene und elektrisch betätigbare Belüftungsventileinrichtung sowie außerdem über eine ebenfalls an den Steuerkanal angeschlossene, elektrisch betätigbare Entlüftungsventileinrichtung. Mithin kann durch aufeinander abgestimmtes, insbesondere auch abwechselndes Betätigen der Belüftungsventileinrichtung und der Entlüftungsventileinrichtung ein Steuerdruck mit dem gewünschten Niveau zur Verfügung gestellt werden. Die beiden Ventileinrichtungen können insbesondere mit dem Verfahren der sogenannten Pulsweitenmodulation getaktet betrieben werden.

Die Belüftungsventileinrichtung enthält zweckmäßigerweise zwei in Reihe geschaltete Belüftungsventile, die simultan betätigt werden, so dass auch bei einem Ausfall eines der Belüftungsventile weiterhin eine zuverlässige Absperrfunktion gewährleistet ist und die Möglichkeit besteht, in einem solchen Fehlerfall weiterhin die Fluidzufuhr zum Betätigungsglied abzusperren.

Die Entlüftungsventileinrichtung enthält zweckmäßigerweise zwei funktionell parallelgeschaltete und ebenfalls simultan betätigbare Entlüftungsventile, wobei durch die Parallelschaltung ein sicheres Entlüften auch dann gewährleistet ist, wenn eines der Entlüftungsventile störungsbedingt ausfallen sollte.

Nachfolgend wird die Erfindung anhand der beiliegenden Zeichnung näher erläutert. In dieser zeigen:
- Figur 1: eine bevorzugte Ausführungsform der erfindungsgemäßen Druckregeleinrichtung in einem Längsschnitt bei entlüftetem Sekundäranschluss,
- Figur 2: die Druckregeleinrichtung aus Figur 1 im regulär mit dem Primäranschluss verbundenen und damit belüfteten Zustand des Sekundäranschlusses, und
- Figur 3: die Druckregeleinrichtung aus Figuren 1 und 2 im Zustand des Auftretens eines Fehlerfalles, der sich dadurch äußert, dass das erste Verschlussglied nicht wie gewünscht in die Schließstellung umgeschaltet hat, sondern in der Offenstellung verharrt.

Die insgesamt mit Bezugsziffer 1 bezeichnete Druckregeleinrichtung enthält ein Druckregelventil 2 mit einer Längsachse 3 und einen insbesondere stirnseitig an das Druckregelventil 2 angebauten Steuerkopf 4.

Das Druckregelventil 2 besitzt ein Ventilgehäuse 5, an dessen Außenfläche mehrere Öffnungen ausgebildet sind, die einen Primäranschluss 6, einen Sekundäranschluss 7 und einen Entlüftungsanschluss 8 bilden.

Der Primäranschluss 6 dient zur Einspeisung eines unter einem Primärdruck stehenden fluidischen Druckmediums, insbesondere Druckluft. Dieses Druckmedium wird von einer nicht abgebildeten Druckquelle geliefert, die über eine geeignete Fluidleituhg an den Primäranschluss 6 anschließbar oder angeschlossen ist. In diese Verbindung kann ein Absperrventil eingeschaltet sein, um die Verbindung zwischen Druckquelle und Primäranschluss 6 wahlweise freizugeben oder zu verschließen.

Der Sekundäranschluss 7 bildet einen Arbeitsanschluss und stellt unter einem geregelten Sekundärdruck stehendes Druckmedium für einen zu betätigenden externen Verbraucher zur Verfügung. Der Sekundärdruck ist mit Hilfe der Druckregeleinrichtung 1 auf einen konstanten Wert beliebig vorgebbarer Höhe einregelbar.

Der Entlüftungsanschluss 8 liegt ständig an Atmosphärendruck. Er dient dazu, einen an den Sekundäranschluss 7 angeschlossenen Verbraucher zu entlüften, um den Sekundärdruck abzusenken oder auf null, d.h. auf Umgebungsdruck abzubauen.

Im Innern des Ventilgehäuses 5 sind, in Achsrichtung der Längsachse 3 mit Abstand aufeinanderfolgend, eine erste Ventilkammer 12 und eine zweite Ventilkammer 13 ausgebildet. Die beiden Ventilkammern 12, 13 sind mittels eines sich koaxial zwischen ihnen erstreckenden Verbindungskanals 14 miteinander verbunden. Von dem Verbindungskanal 14 geht seitlich ein zu dem Sekundäranschluss 7 führender Arbeitskanal 15 ab.

Die erste Ventilkammer 12 kommuniziert über einen sich aus mehreren Kanalabschnitten 16a, 16b, 16c, 16d zusammensetzenden Speisekanal 16 mit dem Primäranschluss 6. Die zweite Ventilkammer 13 ist über einen Entlüftungskanal 17 mit dem Entlüftungsanschluss 8 verbunden.

Ein Bestandteil des Druckregelventils 2, insbesondere der dem Steuerkopf 4 entgegengesetzte Endabschnitt, ist zweckmäßigerweise als Filtereinheit 18 ausgebildet. In ihr wird das vom Primäranschluss 6 in die erste Ventilkammer 12 strömende Druckmedium gefiltert. Die Filtereinheit 18 enthält einen luftdurchlässigen, Verunreinigungen zurückhaltenden Filterkörper 22, der eine von dem einen Kanalabschnitt 16b gebildete Filter-Einlasskammer von einer in seinem Innern ausgebildeten und von einem anderen Kanalabschnitt 16c gebildeten Filter-Auslasskammer abtrennt. Die Filter-Einlasskammer 16b ist über einen Kanalabschnitt 16a des Speisekanals 16 mit dem Primäranschluss 6 verbunden, die Filter-Auslasskammer 16c kommuniziert über einen oder mehrere Kanalabschnitte 16d des Speisekanals 16 mit der ersten Ventilkammer 12. Die Filtereinheit 18 ist optional und kann somit auch entfallen. Es ist also auch eine filterlose, direkte Verbindung zwischen dem Primäranschluss 6 und der ersten Ventilkammer 12 möglich.

Der sich an die erste Ventilkammer 12 anschließende Längenabschnitt des Verbindungskanals 14 bildet eine erste Überströmöffnung 23, während der sich an die zweite ventilkammer 13 anschließende Längenabschnitt des Verbindungskanals 14 eine zweite Überströmöffnung 24 bildet. Da der Arbeitskanal 15 in den Verbindungskanal 14 einmündet, ermöglicht jede Überströmöffnung 23, 24 eine Fluidverbindung zwischen der ihr zugeordneten Ventilkammer 12, 13 und dem Sekundäranschluss 7.

Die beiden Überströmöffnungen 23, 24 münden mit einander entgegengesetzter Orientierung in die Ventilkammern 12, 13 aus. Dabei ist die erste Überströmöffnung 23 von einem ersten Ventilsitz 25 umrahmt, während die zweite Überströmöffnung von einem zweiten Ventilsitz 26 umrahmt ist. Die beiden Ventilsitze 25, 26 sind insbesondere direkt an dem Ventilgehäuse 5 ausgebildet und weisen in Achsrichtung der Längsachse 3 in einander entgegengesetzte Richtungen.

In der ersten Ventilkammer 12 ist ein erstes Verschlussglied 27 in Achsrichtung der Längsachse 3 bewegbar aufgenommen. Die hierbei mögliche Verschlussgliedbewegung, bei der es sich um eine Linearbewegung handelt, ist bei 32 durch einen Doppelpfeil illustriert.

Das zweite Verschlussglied 28 ist in der zweiten Ventilkammer 13 ebenfalls derart verschiebbar gelagert, dass sie eine Verschlussgliedbewegung 32 in Achsrichtung der Längsachse 3 ausführen kann.

Jedes Verschlussglied 27, 28 hat an der dem zugeordneten Ventilsitz 25, 26 zugewandten Stirnseite einen Abdichtabschnitt 33. Jedes Verschlussglied 27, 28 ist im Rahmen seiner Verschlussgliedbewegung 32 wahlweise in eine Schließstellung oder in mindestens eine Offenstellung bewegbar. In der Schließstellung liegt es mit seinem Abdichtabschnitt 33 dichtend am zugeordneten Ventilsitz 25, 26 an und verschließt die zugehörige Überströmöffnung 23, 24, so dass ein Fluidübertritt zwischen der betreffenden Ventilkammer 12 oder 13 und dem Sekundäranschluss 7 nicht möglich ist. In der Offenstellung ist das betreffende Verschlussglied 27, 28 vom zugeordneten Ventilsitz 25, 26 mehr oder weniger weit abgehoben und gibt somit einen dem Grad des Abstandes vom Ventilsitz 25, 26 entsprechenden Strömungsquerschnitt frei, der einen Fluidübertritt ermöglicht.

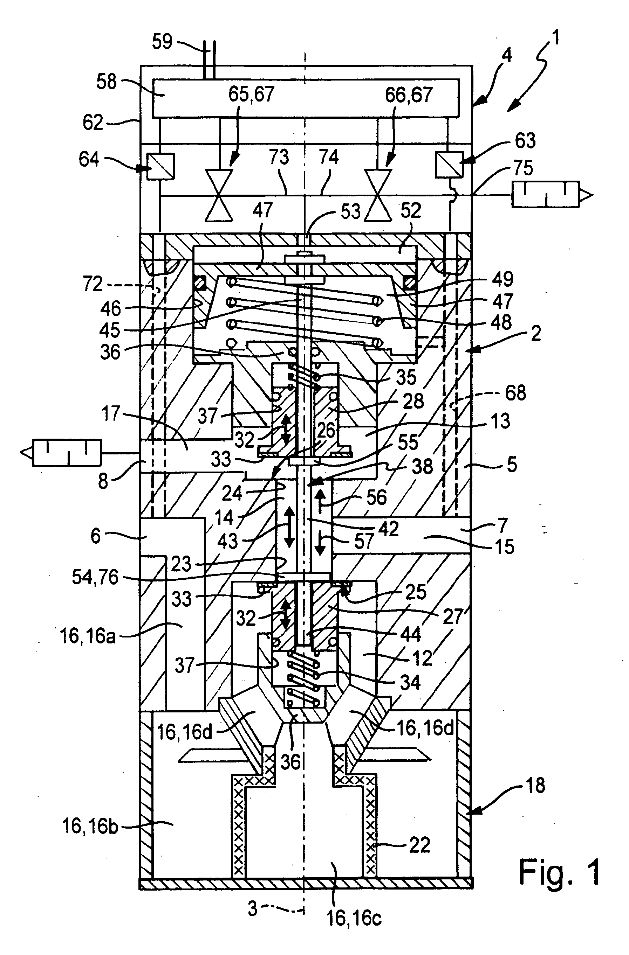

In Figur 1 ist das erste Verschlussglied 27 bei Einnahme seiner Schließstellung und das zweite Verschlussglied 28 bei Einnahme einer einen maximalen Strömungsquerschnitt der zweiten Überströmöffnung freigebenden maximalen Offenstellung gezeigt.

Beide Verschlussglieder 27, 28 sind federnd in Richtung ihrer Schließstellung vorgespannt. Hierzu ist zweckmäßigerweise jedem Verschlussglied 27, 28 eine Federeinrichtung zugeordnet, die im Falle des ersten Verschlussgliedes 27 als erste Federeinrichtung 34 und im Falle des zweiten Verschlussgliedes 28 als zweite Federeinrichtung 35 bezeichnet sei.

Exemplarisch handelt es sich bei den Federeinrichtungen 34, 35 um Druckfedereinrichtungen. Jede Federeinrichtung 34, 35 befindet sich auf der dem Abdichtabschnitt 33 axial entgegengesetzten Rückseite des zugehörigen Verschlussgliedes 27, 28 und stützt sich dabei einerseits axial am Verschlussglied 27, 28 und andererseits an einer ventilgehäusefesten Abstützwand 36 ab.

Zweckmäßigerweise ist jedes Verschlussglied 27, 28 zur Ausführung seiner Verschlussgliedbewegung 32 in einer bezüglich des Ventilgehäuses 5 ortsfesten Führungsausnehmung 37, die in die zugeordnete Ventilkammer 12, 13 einmündet, linear verschiebbar geführt. Jedes Verschlussglied 27, 28 taucht mit seiner Rückseite in eine solche Führungsausnehmung 37 ein. Die Abstützwand 36 ist vom Boden der Führungsausnehmung 34 gebildet.

Die beiden Verschlussglieder 27, 28 sind Komponenten einer mehrteiligen Regelungseinheit 38 des Druckregelventils 2, die auch noch ein beim Ausführungsbeispiel stangen- oder stößelförmig ausgebildetes Betätigungsglied 42 enthält, das sich in bezüglich der Längsachse 3 koaxialer Ausrichtung im Innern des Ventilgehäuses 5 erstreckt und das unter Ausführung einer durch einen Doppelpfeil angedeuteten linearen Regelungsbewegung 43 relativ zum Ventilgehäuse 5 verschiebbar ist.

Das Betätigungsglied 42 hat einen in die erste Ventilkammer 12 hineinragenden ersten Endabschnitt 44. Ausgehend von diesem ersten Endabschnitt 44 erstreckt es sich koaxial durch die erste Überströmöffnung 23 und die zweite Überströmöffnung 24 hindurch in die zweite Ventilkammer 13 hinein. Während sie allerdings mit ihrem ersten Endabschnitt 44 innerhalb der ersten Ventilkammer 12 endet, durchsetzt sie mit ihrem entgegengesetzten axialen Endbereich die der zweiten Ventilkammer 13 zugeordnete Abstützwand 36 und ragt mit einem zweiten Endabschnitt 45 in eine Steuerkammer 46 hinein, die auch im Ventilgehäuse 5 ausgebildet ist.

Der zweite Endabschnitt 45 des Betätigungsgliedes 42 ist mit einer axial beweglich in der Steuerkammer 46 angeordneten Antriebswand 47 bewegungsgekoppelt. Exemplarisch ist die Antriebswand 47 als Antriebskolben ausgebildet, der gleitverschieblich in der Steuerkammer 46 gelagert ist. Bei einer anderen Ausführungsform besteht die Antriebswand 47 aus einer Membran.

Eine Rückstellfedereinrichtung 48, die insbesondere als Druckfeder ausgebildet ist, wirkt ständig zwischen dem Ventilgehäuse 5 und der Antriebswand 47 und drückt daher die Antriebswand 47 einschließlich des beim Ausführungsbeispiel an ihr befestigten Betätigungsgliedes 42 in Richtung einer Grundstellung, bei der es sich funktionell um eine Entlüftungsstellung handelt. Die Rückstellfedereinrichtung 48 befindet sich in dem zwischen der Antriebswand 47 und der zweiten Ventilkammer 13 liegenden Abschnitt der Steuerkammer 46, der als Federkammer 49 bezeichnet sei.

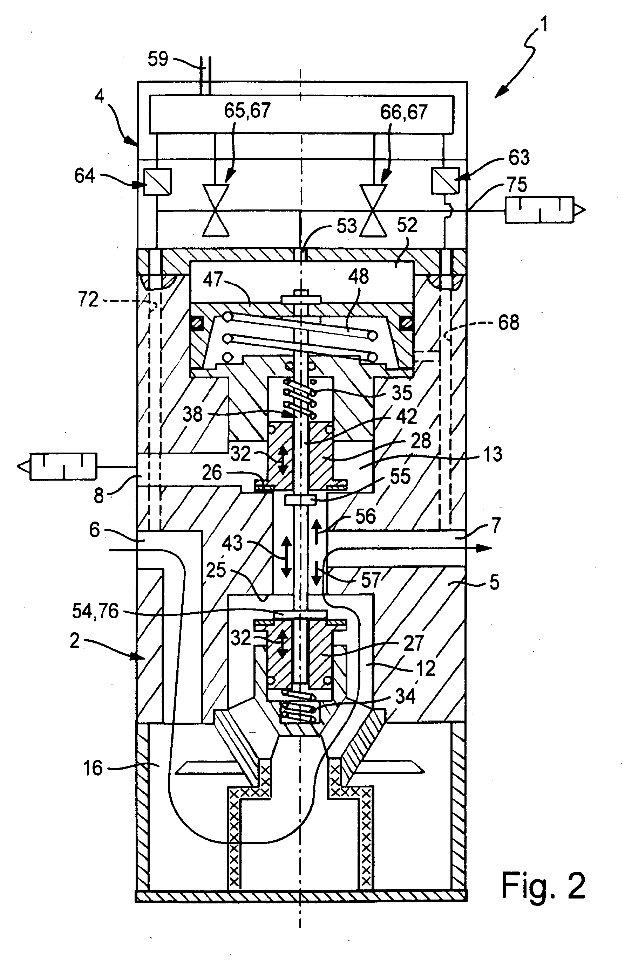

Die Antriebswand 47 begrenzt auf der von den beiden Ventilkammern 12, 13 axial abgewandten Seite einen im Folgenden als Antriebskammer 52 bezeichneten Abschnitt der Steuerkammer 46. In diese Antriebskammer 52 mündet ein Steuerkanal 53, der im Betrieb dazu dient, ein unter einem Steuerdruck stehendes Druckmedium in die Antriebskammer 52 einzuspeisen, das die Antriebswand 47 und mithin auch das Betätigungsglied 42 entgegengesetzt zur Wirkungsrichtung der Rückstellfedereinrichtung 48 beaufschlagt. Wenn der Steuerdruck ausreichend groß ist, kann das Betätigungsglied 42 zu einer Regelungsbewegung 43 angetrieben werden, im Rahmen derer es in eine aus Figur 2 ersichtliche Belüftungsstellung umgeschaltet wird.

Durch Variation des Steuerdruckes kann also die Regelungsbewegung 43 in der einen oder anderen Bewegungsrichtung hervorgerufen werden.

Das Betätigungsglied 42 weist für jedes Verschlussglied 27, 28 ein Anschlagglied auf, wobei das dem ersten Verschlussglied 27 zugeordnete Anschlagglied als erstes Anschlagglied 54 und das dem zweiten Verschlussglied 28 zugeordnete Anschlagglied als zweites Anschlagglied 55 bezeichnet sei. Die beiden Anschlagglieder 54, 55 sind in Achsrichtung der Längsachse 3 mit Abstand zueinander angeordnet.

Das erste Anschlagglied 54 ist dem ersten Verschlussglied 27 im Bereich der ersten Überströmöffnung 23 axial vorgelagert. Das zweite Anschlagglied 55 ist dem zweiten Verschlussglied 28 im Bereich der zweiten Überströmöffnung 24 axial vorgelagert. Jedes Anschlagglied 54, 55 bildet einen Bewegungsanschlag für das zugeordnete, in Achsrichtung der Längsachse 3 relativ zum Betätigungsglied 42 verschiebbare erste beziehungsweise zweite Verschlussglied 27, 28. Die beiden Verschlussglieder 27, 28 sind unabhängig voneinander relativ zum Ventilgehäuse 5 und auch zum Betätigungsglied 42 bewegbar. Durch die jeweils zugeordnete Federeinrichtung 34, 35 werden sie in Richtung des ihnen jeweils vorgelagerten Anschlaggliedes 54, 55 ständig federnd beaufschlagt.

In der Grundstellung der Druckregeleinrichtung 1, die der in Figur 1 gezeigten Entlüftungsstellung des Betätigungsgliedes 42 entspricht, ist die Antriebskammer 52 drucklos, indem der angelegte Steuerdruck Null beträgt, also absolut dem Atmosphärendruck entspricht ist. In diesem Fall kommt die Wirkung der Rückstellfedereinrichtung 48 voll zur Geltung, so dass das Betätigungsglied 42 in einer Entlüftungsrichtung 56 maximal in Richtung zur Steuerkammer 46 verlagert ist. In dieser Entlüftungsstellung 56 ist das zweite Verschlussglied 28 durch das zweite Anschlagglied 55 vom zweiten Ventilsitz 26 abgehoben, so dass der Sekundäranschluss 7 über die offene zweite Überströmöffnung 24 hinweg zum Entlüftungsanschluss 8 hin entlüftet ist. Gleichzeitig ist die zweite Überströmöffnung 24 geschlossen, weil das erste Anschlagglied 54 so weit in die erste Überströmöffnung 34 eintaucht, dass das erste Verschlussglied 27 durch die Stellkraft der ersten Federeinrichtung 34 zur Anlage am ersten Ventilsitz 25 vorgespannt ist und die Schließstellung einnimmt.

Wenn an dem Sekundäranschluss 7 ein Druckaufbau gewünscht ist, wird ein Umschalten des Betätigungsgliedes 42 in die aus Figur 2 ersichtliche Belüftungsstellung hervorgerufen. Dies geschieht dadurch, dass in die Antriebskammer 52 ein unter einem entsprechend hohen Steuerdruck stehendes Druckmedium eingespeist wird, welches in der Lage ist, die Gegenkraft der Rückstellfedereinrichtung 48 zu überwinden. Als Folge des erhöhten Steuerdruckes führt das Betätigungsglied 42 eine Regelungsbewegung 43 in einer der Entlüftungsrichtung 56 entgegengesetzten Belüftungsrichtung 57 aus. Als Folge hiervon taucht zum einen das zweite Anschlagglied 55 in die zweite Überströmöffnung 24 ein, so dass das unter der Vorspannung der zweiten Federeinrichtung 35 stehende zweite Verschlussglied 28 bis zur Anlage am zugeordneten zweiten Ventilsitz 26 und der damit verbundenen Einnahme der Schließstellung nachfolgt. Die Fluidverbindung zwischen dem Sekundäranschluss 7 und dem Entlüftungsanschluss 8 ist dadurch unterbrochen.

Andererseits drückt das ebenfalls in der Belüftungsrichtung 57 bewegte erste Anschlagglied 54 von der Seite der ersten Überströmöffnung 23 her auf das erste Verschlussglied 27 und hebt selbiges unter Überwindung der Federkraft der ersten Federeinrichtung 34 vom ersten Ventilsitz 25 ab, so dass es eine Offenstellung einnimmt, wobei in Figur 2 die maximal mögliche Offenstellung gezeigt ist.

Die fluidische Ansteuerung des Betätigungsgliedes 42 mittels des Steuerdruckes erfolgt mit Hilfe der Komponenten des Steuerkopfes 4. Eine dieser Komponenten besteht aus einer elektronischen Steuereinrichtung 58, die über Schnittstellenmittel 59 der Druckregeleinrichtung 1 mit einer nicht abgebildeten externen elektronischen Steuereinheit kommunizieren kann. Die elektronische Steuereinrichtung 58 befindet sich zweckmäßigerweise in einem gesonderten Elektronikmodul 62 des Steuerkopfes 4.

Weitere Komponenten des Steuerkopfes 4 sind vorzugsweise eine Sekundärdruck-Sensoreinrichtung 63, eine Primärdruck-Sensoreinrichtung 64 und eine sich bevorzugt aus einer elektrisch betätigbaren Belüftungsventileinrichtung 65 und einer diesbezüglich unabhängig betreibbaren Entlüftungsventileinrichtung 66 zusammensetzende, elektrisch betätigbare Vorsteuerventileinrichtung 67.

Über einen Sekundärdruck-Abgriffskanal 68 ist die Sekundärdruck-Sensoreinrichtung 63 fluidisch an den Sekundäranschluss 7 angeschlossen. Der Sekundärdruck-Abgriffskanal 68 kommuniziert zweckmäßigerweise auch mit der der Antriebskammer 52 entgegengesetzten und die Rückstellfedereinrichtung 48 aufnehmenden Federkammer 49 der Steuerkammer 46.

Die Primärdruck-Sensoreinrichtung 64 ist über einen Primärdruck-Abgriffskanal 72 fluidisch mit dem Primäranschluss 6 verbunden und somit in der Lage, den Primärdruck zu erfassen.

Beide Sensoreinrichtungen 63, 64 sind elektrisch mit der elektronischen Steuereinrichtung 58 verbunden.

Die Belüftungsventileinrichtung 65 ist in den Verlauf eines Vorsteuer-Belüftungskanals 73 eingeschaltet, der den Primäranschluss 6 mit dem Steuerkanal 53 verbindet, wobei exemplarisch der Primärdruck-Abgriffskanal 72 einen Längenabschnitt des Vorsteuer-Belüftungskanals 73 bildet. Die Entlüftungsventileinrichtung 66 ist in einen Vorsteuer-Entlüftungskanal 74 eingeschaltet, die den Steuerkanal 53 mit einem zur Atmosphäre führenden Vorsteuer-Entlüftungsanschluss 75 verbindet, der zweckmäßigerweise an dem Steuerkopf 4 angeordnet ist. Beide Ventileinrichtungen 66, 67 sind wiederum an die elektronische Steuereinrichtung 58 elektrisch angeschlossen.

Im Betrieb regelt die Druckregeleinrichtung 1 den am Sekundäranschluss 7 anstehenden Sekundärdruck, der die Höhe eines Sekundärdruck-Istwertes hat, entsprechend eines in der elektronischen Steuereinrichtung 58 abgespeicherten Sekundärdruck-Sollwertes ein. Der Sekundärdruck-Sollwert ist über die Schnittstellenmittel 59 von außen her in die elektronische Steuereinrichtung 58 eingebbar. Der Vergleich zwischen Sekundärdruck-Sollwert und Sekundärwert-Istwert findet in der elektronischen Steuereinrichtung 58 statt, die in Abhängigkeit vom Vergleichsergebnis elektrische Steuersignale generiert, die der Vorsteuerventileinrichtung 67 zugeführt werden, um entsprechend eine Erhöhung oder eine Verringerung des in der Antriebskammer 52 anstehenden Steuerdruckes herbeizuführen. Der Sekundärdruck-Istwert wird durch die Sekundärdruck-Sensoreinrichtung 63 erfasst, die aus Gründen einer erhöhten Sicherheit zweckmäßigerweise aus zwei funktionell parallelgeschalteten und redundant arbeitenden Drucksensoren besteht. Somit ist auch bei Ausfall eines Drucksensors aufgrund des weiterhin arbeitenden anderen Drucksensors eine Ausfallssicherheit gegeben.

Die beiden Ventileinrichtungen 66, 67 enthalten exemplarisch jeweils mindestens ein Schaltventil, wobei eine pulsweitenmodulierte Ansteuerung mit getakteter Betriebsweise vorgesehen ist. Die Ventileinrichtungen 66, 67 werden in aufeinander abgestimmter Weise insbesondere alternativ betätigt.

Bei der Druckregeleinrichtung 1 ist besonderer Wert darauf gelegt, dass die Entlüftungsfunktion abgesichert ist. Dadurch ist im Notfall ein sicheres Entlüften des am Sekundäranschluss 7 angeschlossenen Verbrauchers gewährleistet.

In diesem Zusammenhang enthält die Entlüftungsventileinrichtung 66 zweckmäßigerweise zwei im einzelnen nicht abgebildete, funktionell parallelgeschaltete, redundante eigenständige Entlüftungsventile, die jedes für sich die gewünschte Entlüftungsfunktion übernehmen können. Sie werden parallel gleichsinnig betrieben, so dass auch bei Ausfall eines Entlüftungsventils die Entlüftungsfunktion weiterhin gegeben ist.

Die Belüftungsventileinrichtung 65 enthält zweckmäßigerweise zwei unabhängig voneinander betreibbare Belüftungsventile, die in Reihe geschaltet sind. Sie sind in der Zeichnung nicht näher illustriert. Im Betrieb der Druckregeleinrichtung 1 werden sie synchron gleichsinnig betätigt. Jedes Belüftungsventil ist, wie zweckmäßigerweise auch jedes Entlüftungsventil, als 2/2-Wegeventil ausgebildet und ist somit in der Lage, den Fluiddurchtritt durch den Vorsteuer-Belüftungskanal 73 alternativ freizugeben oder abzusperren. Durch die Reihenschaltung zweier eigenständiger Belüftungsventile ist sichergestellt, dass das in Verbindung mit einem Entlüften des Steuerkanals 53 erforderliche Absperren des Vorsteuer-Belüftungskanals 73 auch dann sichergestellt ist, falls eines der beiden Entlüftungsventile ausfallen sollte.

Die Druckregeleinrichtung 1 ist des Weiteren mit Mitteln versehen, die es auf einfache Weise ermöglichen, eine,Fehlfunktion des ersten Verschlussgliedes 27 zu detektieren, die darin besteht, dass das erste Verschlussglied 27 in einer Offenstellung verharrt, obwohl das Betätigungsglied 42 in die Belüftungsstellung bewegt wurde und demzufolge das erste Verschlussglied 27 eigentlich durch die zugeordnete erste Federeinrichtung 34 in seine Schließstellung hätte verlagert werden müssen.

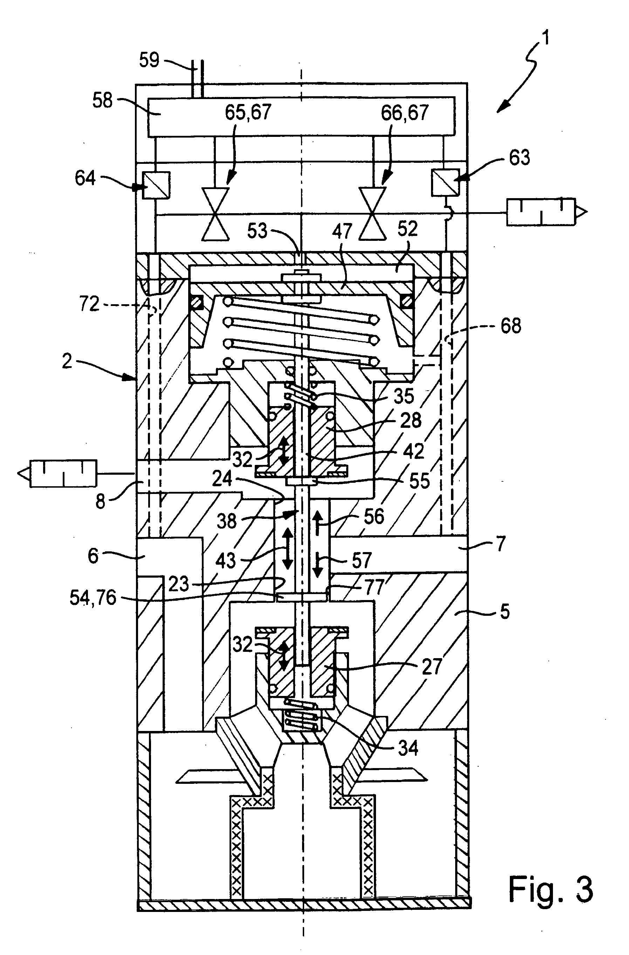

Um diese Fehlererkennung zu ermöglichen, ist beim Ausführungsbeispiel das zum Öffnen und Offenhalten auf das erste Verschlussglied 27 einwirkende erste Anschlagglied 54 des Betätigungsgliedes 42 als Drosselglied 76 ausgebildet, das in der aus Figuren 1 und 3 ersichtlichen Entlüftungsstellung des Betätigungsgliedes 42 bezüglich der zugeordneten ersten Überströmöffnung 23 eine Drosselstellung einnimmt, in der es den zwischen dem Primäranschluss 6 und dem Sekundäranschluss 7 offenen Strömungsquerschnitt bis auf einen Drosselspalt 77 derart verengt, dass eine Drosselungswirkung auftritt. Man kann also sagen, dass die Druckregeleinrichtung 1 ein dem ersten Verschlussglied 27 zusätzlich zugeordnetes Drosselventil aufweist, das durch das Drosselglied 76 und das Ventilgehäuse 5 gebildet ist.

Bei dem beispielhaften Druckregelventil 2 ist die Schließstellung des ersten Verschlussgliedes 27 dadurch gekennzeichnet, dass das erste Anschlagglied 54 zumindest teilweise und vorzugsweise vollständig axial in die erste Überströmöffnung 23 eingetaucht ist. Ebenso taucht das zweite Anschlagglied 55 zumindest teilweise und vorzugsweise zur Gänze in die zweite Überströmöffnung 24 ein, wenn das zweite Verschlussglied 28 seine Schließstellung einnimmt. Während jedoch das zweite Anschlagglied 55 über eine relativ kleine Querschnittsfläche verfügt, so dass es nur einen geringen Bruchteil der zweiten Überströmöffnung 24 ausfüllen kann, hat das erste Anschlagglied 54, um ein Drosselglied 76 zu bilden, eine wesentlich größere Querschnittsfläche, so dass es im in die erste Überströmöffnung 23 eingetauchten Zustand den Querschnitt der ersten Überströmöffnung 23 annähernd ausfüllt. Es bleibt dann nur noch ein sehr kleiner, bevorzugt ringförmiger Drosselspalt 77 zwischen dem Außenumfang des Drosselgliedes 76 und der Umfangsfläche der ersten Überströmöffnung 23, der als Strömungsspalt zur Verfügung steht und den dem Druckmedium zur Verfügung stehenden Strömungsquerschnitt definiert.

Dieser Strömungsquerschnitt ist insbesondere wesentlich kleiner als der dem Druckmedium in der Belüftungsstellung gemäß Figur 2 bei maximal geöffnetem erstem Verschlussglied 27 zum Hindurchströmen durch die erste Überströmöffnung 23 zur Verfügung stehende Strömungsquerschnitt.

Anstatt das Drosselglied 76 wie beim Ausführungsbeispiel in Baueinheit mit dem ersten Anschlagglied 54 auszubilden, kann es als eigenständiger Bestandteil des Betätigungsgliedes 42 ausgeführt sein und beispielsweise eine zu dem ersten Anschlagglied 54 axial beabstandete Position einnehmen. Dies insbesondere dann, wenn das erste Anschlagglied 54 durch entsprechend angepasste Gestaltung des ersten Verschlussgliedes 27 im Innern dieses ersten Verschlussgliedes 27 zu liegen kommt. Ungeachtet dessen ist das Drosselglied 76 jedenfalls derart ständig ortsfest an dem Betätigungsglied 42 angeordnet, dass es dessen Regelungsbewegung 43 mitmacht. Es handelt sich bei ihm außerdem um eine Komponente, die zusätzlich zu den beiden mechanisch voneinander entkoppelten ersten und zweiten Verschlussgliedern 27, 28 vorhanden ist.

Damit das Drosselglied 76 die Fluidströmung zwischen dem Primäranschluss 6 und dem Sekundäranschluss 7 nicht beeinträchtigt, wenn die Belüftungsstellung gemäß Figur 2 vorliegt, ist das Drosselglied 76 insbesondere so am Betätigungsglied 42 platziert, dass es in der Belüftungsstellung des Betätigungsgliedes 42 und insbesondere in der die maximale Offenstellung des ersten Verschlussgliedes 27 vorgebenden Belüftungsstellung vollständig außerhalb der ersten Überströmöffnung 23 liegt und der ersten Überströmöffnung 23 zweckmäßigerweise mit einem ausreichenden axialen Abstand vorgelagert ist.

Das Drosselglied 76 ist bevorzugt als von dem Betätigungsglied 42 radial abstehender Ringvorsprung ausgebildet, wobei das Betätigungsglied 42 axial beidseits des Drosselgliedes 76 insbesondere stößel- oder stangenförmig ausgestaltet ist. Es handelt sich bei dem Drosselglied 76 vorzugsweise um einen einstückigen Bestandteil des Betätigungsgliedes 42.

Das Drosselglied 76 nimmt seine Drosselstellung immer dann ein, wenn das Betätigungsglied 42 in die Entlüftungsstellung geschaltet ist. Seine Drosselungsfunktion übt es jedoch nur aus, wenn gleichzeitig eine Fehlfunktion des ersten Verschlussgliedes 27 vorliegt, indem das erste Verschlussglied 27 offen geblieben ist. Wenn im Normalbetrieb das erste Verschlussglied 27 in der Entlüftungsstellung des Betätigungsgliedes 42 seine Schließstellung gemäß Figur 1 einnimmt, bleibt das Drosselglied 76 wirkungslos, weil das erste Verschlussglied 27 die Fluidströmung zwischen dem Primäranschluss 6 und dem Sekundäranschluss 7 komplett absperrt.

Vorzugsweise wird in der Drosselstellung des Drosselgliedes 76 aufgrund einer geeigneten gegenseitigen Abstimmung der Querschnittsflächen des Drosselgliedes 76 und der ersten Überströmöffnung 23 eine derart hohe Drosselungsintensität erzielt, dass der in dem geschilderten Fehlerfall an dem Sekundäranschluss 7 anstehende Sekundärdruck-Istwert nicht mehr als 10% des am Primäranschluss 6 anstehenden Primärdruckes beträgt, wobei er selbst dann einen Sekundärdruck-Istwert von 1 bar nicht überschreitet, wenn der Primärdruck über 1 bar liegt. Diese Betrachtung gilt in Verbindung mit einem gleichzeitig seine Offenstellung einnehmenden zweiten Verschlussglied 28, also wenn das Betätigungsglied 42 in die Entlüftungsstellung bewegt wurde. Zwar kann dann das durch den Drosselspalt 77 hindurchströmende Druckmedium mit einem relativ großen Volumenstrom über den offen erreichbaren Entlüftungsanschluss 8 entlüftet werden, gleichwohl ist jedoch kein vollständiger Druckabbau möglich, so dass an dem Sekundäranschluss 7 weiterhin ein Sekundärdruck ansteht, der einen gewissen Überdruck-Restwert aufweist. Dieser Überdruck-Restwert hat, wie der Name schon sagt, einen gewissen Überdruck als Restdruckwert und liegt daher über dem Atmosphärendruck, gleichzeitig beläuft er sich jedoch auf maximal 10% des am Primäranschluss anstehenden Primärdruckwertes und überschreitet zweckmäßigerweise selbst dann eine Obergrenze von 1 bar nicht, wenn der Primärdruck oberhalb von 1 bar liegt.

Das geschilderte Drosselungsverhalten macht man sich bei der Erkennung des beispielsweise durch einen Bruch der ersten Federeinrichtung 34 oder eines durch ein Verklemmen des geöffneten ersten Verschlussgliedes 27 hervorgerufenen Funktionsfehlers des ersten Verschlussgliedes 27 zunutze.

Die elektronische Steuereinrichtung 58 ist so programmiert, dass sie zumindest dann eine Plausibilitätsprüfung stattfindet, wenn in der Antriebskammer 52 ein Steuerdruck angelegt wird, dessen Höhe ein Umschalten des Betätigungsgliedes 42 in die Entlüftungsstellung zur Folge hat, um den Sekundäranschluss 7 zu entlüften bzw. drucklos zu schalten. Nachdem beim Ausführungsbeispiel das Betätigungsglied 42 durch die Rückstellfedereinrichtung 48 ständig in Richtung der Entlüftungsstellung beaufschlagt ist, beläuft sich der zum Umschalten in die Entlüftungsstellung anzulegende Steuerdruck auf 0 bar, was dadurch erreicht wird, dass die Antriebskammer 52 durch Öffnen der Entlüftungsventileinrichtung 66 auf Atmosphärendruck entlüftet wird. Die Plausibilitätsprüfung besteht darin, dass mit Hilfe der Sekundärdruck-Sensoreinrichtung 63 der Sekundärdruck dahingehend überprüft wird, ob der Sekundärdruck-Istwert tatsächlich der Vorgabe entsprechend auf null absinkt oder ob er ein dem oben erwähnten Restdruckwert entsprechendes geringfügig erhöhtes Druckniveau beibehält. Ist Letzteres der Fall, wird dies von der elektronischen Steuereinrichtung 58 als Fehlerfall des ersten Verschlussgliedes 27 interpretiert und die elektronische Steuereinrichtung 58 generiert ein elektrisches Meldesignal.

Das elektrische Meldesignal kann beispielsweise ein akustisches und/oder optisches Warnsignal sein oder hervorrufen. Ebenso kann die Druckregeleinrichtung 1 so ausgelegt sein, dass das elektrische Meldesignal an den Schnittstellenmitteln 59 der elektronischen Steuereinrichtung 58 ausgegeben wird und beispielsweise der dort angeschlossenen externen elektronischen Steuereinheit zugeführt wird, die dann mindestens eine weitere Aktion hervorruft, beispielsweise ein Abschalten der Fluidversorgung des Primäranschlusses 6 der Druckregeleinrichtung 1. Andere Maßnahmen sind aber ebenfalls denkbar.

Bei der Plausibilitätsprüfung wird der am Primäranschluss 6 anstehende Primärdruck berücksichtigt, wie er von der Primärdruck-Sensoreinrichtung 64 ermittelt wird.

Ein weiteres vorteilhaftes Sicherheitsmerkmal der beispielsgemäßen Druckregeleinrichtung 1 besteht darin, dass im Falle eines Ausfalls der Rückstellfedereinrichtung 48 das erste Verschlussglied 27 über die anstehende Druckkraft geöffnet wird. Darüber hinaus ist die elektronische Steuereinrichtung 58 zweckmäßigerweise so programmiert, dass in einem solchen Fall aufgrund des durch die Sekundärdruck-Sensoreinrichtung 63 ermittelten Druckanstieges des Sekundärdruckes der dem Betätigungsglied 42 auferlegte Steuerdruck auf null reduziert wird, so dass der auf das zweite Verschlussglied 28 einwirkende Sekundärdruck selbst in der Lage ist, das zweite Verschlussglied 28 in die Offenstellung zu bewegen und den Sekundäranschluss 7 zu entlüften.

Die elektronische Steuereinrichtung 58 ist zweckmäßigerweise als weitere Sicherheitsmaßnahme in Form zweier redundanter interner elektronischer Steuereinheiten ausgeführt. Bei einer vorteilhaften Betriebsweise der Druckregeleinrichtung 1 wird der Sekundärdruck durch die beiden parallelgeschalteten Drucksensoren der Sekundärdruck-Sensoreinrichtung 63 sicher ermittelt, wobei die beiden Drucksensoren über die redundant ausgeführten internen elektronischen Steuereinheiten auf Fehler überwacht werden. Tritt ein Fehler auf oder wird ein Grenzwert überschritten, wird das Betätigungsglied 42 in die Entlüftungsstellung umgeschaltet, um den Sekundäranschluss 7 und das nachgeschaltete pneumatische Netz oder einen sonstigen Verbraucher zu entlüften. Über die elektrischen Schnittstellenmittel 59 können die Fehler ausgelesen werden. Erst nach einem Reset und einem erneuten Selbsttest kann die Druckregeleinrichtung 1 dann wieder in Betrieb genommen werden.

## Patentansprüche

1. Druckregeleinrichtung, mit einem Druckregelventil (2), das ein Ventilgehäuse (5) mit einem zur Druckmittelzufuhr dienenden Primäranschluss (6), einem druckgeregelten Sekundäranschluss (7) zur Verbindung mit einem Verbraucher und einen Entlüftungsanschluss (8) aufweist, wobei zwischen dem Sekundäranschluss (7) und dem Primäranschluss (6) eine von einem ersten Ventilsitz (25) umrahmte erste Überströmöffnung (23) und zwischen dem Sekundäranschluss (7) und dem Entlüftungsanschluss (8) eine von einem zweiten Ventilsitz (26) umrahmte zweite Überströmöffnung (24) angeordnet ist, wobei dem ersten Ventilsitz (25) ein federnd in Richtung einer am ersten Ventilsitz (25) anliegenden Schließstellung vorgespanntes erstes Verschlussglied (27) und dem zweiten Ventilsitz (26) ein federnd in Richtung einer am zweiten Ventilsitz (26) anliegenden Schließstellung vorgespanntes zweites Verschlussglied (28) gegenüberliegt, wobei beide Verschlussglieder (27, 28) zu einer bezüglich des Ventilgehäuses (5) beweglichen Regelungseinheit (38) gehören, die außerdem ein relativ zu den beiden Verschlussgliedern (27, 28) bewegliches und durch Beeinflussung mittels eines Steuerdruckes zu einer Regelungsbewegung (43) relativ zum Ventilgehäuse (5) antreibbares Betätigungsglied (42) enthält, durch das jedes Verschlussglied (27, 28) in mindestens eine vom zugeordneten Ventilsitz (25, 26) abgehobene Offenstellung bewegbar ist, **dadurch gekennzeichnet, dass** die Regelungseinheit (38) zusätzlich zu den beiden Verschlussgliedern (27, 28) ein ortsfest an dem Betätigungsglied (42) angeordnetes und dessen Regelungsbewegung (43) mitmachendes Drosselglied (76) aufweist, das in einer dem ersten Verschlussglied (27) die Einnahme seiner Schließstellung erlaubenden Stellung des Betätigungsgliedes (42) eine den Strömungsquerschnitt zwischen dem Primäranschluss (6) und dem Sekundäranschluss (7) im Vergleich zu der durch das Betätigungsglied (42) hervorrufbaren maximalen Offenstellung des ersten Verschlussgliedes (27) auf einen Drosselspalt (77) verengende Drosselstellung einnimmt.

2. Druckregeleinrichtung nach Anspruch 1, **dadurch gekennzeichnet, dass** das Drosselglied (76) derart an dem Betätigungsglied (42) angeordnet ist, dass es in der die Offenstellung des ersten Verschlussgliedes (27) vorgebenden Stellung des Betätigungsgliedes (42) vollständig außerhalb der ersten Überströmöffnung (23) liegt und in der Drosselstellung zumindest teilweise und zweckmäßigerweise vollständig in die erste Überströmöffnung (23) eintaucht.

3. Druckregeleinrichtung nach Anspruch 1 oder 2, **dadurch gekennzeichnet, dass** das Drosselglied (76) als von dem Betätigungsglied (42) radial abstehender Ringvorsprung ausgebildet ist.

4. Druckregeleinrichtung nach einem der Ansprüche 1 bis 3, **dadurch gekennzeichnet, dass** das Drosselglied (76) ein einstückiger Bestandteil des Betätigungsgliedes (42) ist.

5. Druckregeleinrichtung nach einem der Ansprüche 1 bis 4, **dadurch gekennzeichnet, dass** das Betätigungsglied (42) ein zum Verlagern des ersten Verschlussgliedes (27) in die Offenstellung auf das erste Verschlussglied (27) einwirkendes Anschlagglied (54) aufweist, das zweckmäßigerweise zugleich das Drosselglied (76) bildet.

6. Druckregeleinrichtung nach einem der Ansprüche 1 bis 5, **dadurch gekennzeichnet, dass** das Drosselglied (76) derart ausgebildet ist, dass bei Einnahme der Drosselstellung des Drosselgliedes (76) und gleichzeitig in der maximalen Offenstellung befindlichem erstem Verschlussglied (27) sowie ebenfalls eine Offenstellung einnehmendem zweitem Verschlussglied (28) der am Sekundäranschluss (7) anliegende Sekundärdruck einen Überdruck als Restdruckwert aufweist, der maximal 10 % des am Primäranschluss anstehenden Primärdruckwertes beträgt und hierbei zweckmäßigerweise 1 bar nicht überschreitet.

7. Druckregeleinrichtung nach einem der Ansprüche 1 bis 6, **dadurch gekennzeichnet, dass** sie eine elektronische Steuereinrichtung (58) aufweist, die ausgebildet ist, um ein elektrisches Meldesignal hervorzurufen, wenn der an dem Sekundäranschluss herrschende Sekundärdruck-Istwert einen vorgegebenen Restdruckwert nicht unterschreitet, obwohl das Betätigungsglied (42) durch einen insbesondere auf Atmosphärenniveau liegenden Steuerdruck beaufschlagt ist, dessen Höhe ein Umschalten des Betätigungsgliedes (42) in eine dem ersten Verschlussglied (27) die Einnahme seiner Schließstellung ermöglichende Stellung hervorruft.

8. Druckregeleinrichtung nach einem der Ansprüche 1 bis 7, **dadurch gekennzeichnet, dass** sie eine den am Sekundäranschluss (7) herrschenden Sekundärdruck erfassende Sekundärdruck-Sensoreinrichtung (63) aufweist, die zweckmäßigerweise an eine elektronische Steuereinrichtung (58) der Druckregeleinrichtung (1) angeschlossen ist und die vorzugsweise zwei funktionell parallelgeschaltete Drucksensoren enthält.

9. Druckregeleinrichtung nach einem der Ansprüche 1 bis 8, **dadurch gekennzeichnet, dass** sie eine den am Primäranschluss (7) herrschenden Primärdruck erfassende Primärdruck-Sensoreinrichtung (64) aufweist, die zweckmäßigerweise an eine elektronische Steuereinrichtung (58) der Druckregeleinrichtung (1) angeschlossen ist, unter deren Mitwirkung vorzugsweise der Steuerdruck für das Betätigungsglied (42) generiert wird.

10. Druckregeleinrichtung nach einem der Ansprüche 1 bis 9, **dadurch gekennzeichnet, dass** sie eine Vorsteuerventileinrichtung (67) aufweist, die den zum Antreiben des Betätigungsgliedes (42) erforderlichen Steuerdruck bereitstellt und die zweckmäßigerweise von dem Primäranschluss (7) mit Druckmedium gespeist wird.

11. Druckregeleinrichtung nach Anspruch 10, **dadurch gekennzeichnet, dass** das Druckregelventil (2) eine Antriebskammer (52) aufweist, die von einer mit dem Betätigungsglied (42) antriebsmäßig gekoppelten beweglichen Antriebswand (47) begrenzt ist und die mit einem den Steuerdruck zuführenden Steuerkanal (53) kommuniziert, wobei die Vorsteuerventileinrichtung (67) eine an den Steuerkanal (52) angeschlossene, elektrisch betätigbare Belüftungsventileinrichtung (65) und ferner eine von der Belüftungsventileinrichtung (65) unabhängige und ebenfalls an den Steuerkanal (52) angeschlossene, elektrisch betätigbare Entlüftungsventileinrichtung (66) aufweist.

12. Druckregeleinrichtung nach einem der Ansprüche 1 bis 11, **dadurch gekennzeichnet, dass** jedem Verschlussglied (27, 28) zur federnden Vorspannung in die Schließstellung eine eigene, vorzugsweise drückend wirkende Federeinrichtung (34, 35) zugeordnet ist, die einerseits mit dem zugeordneten Verschlussglied (27, 28) und andererseits mit dem Ventilgehäuse (5) zusammenwirkt.

13. Druckregeleinrichtung nach einem der Ansprüche 1 bis 12, **dadurch gekennzeichnet, dass** die beiden Ventilsitze (25, 26) in einander entgegengesetzte Richtungen weisend koaxial mit Abstand zueinander angeordnet sind, wobei das bevorzugt stößel- oder stangenförmig ausgebildete Betätigungsglied (42) beide Überströmöffnungen (23, 24) koaxial durchsetzt und wobei die beiden Verschlussglieder (27, 28) in unabhängig voneinander axial verschieblicher Weise auf dem Betätigungsglied (42) angeordnet sind.

14. Verfahren zum Betreiben einer Druckregeleinrichtung nach einem der Ansprüche 1 bis 13, **dadurch gekennzeichnet, dass** unter Verwendung einer elektronischen Steuereinrichtung (58) auf der Grundlage eines vorgegebenen oder vorgebbaren Sekundärdruck-Sollwertes und eines am Sekundäranschluss herrschenden Sekundärdruck-Istwertes ein zum Antreiben des Betätigungsgliedes (42) genutzter Steuerdruck generiert wird, wobei ein elektrisches Meldesignal erzeugt wird, wenn der Sekundärdruck einen vorgegebenen oder vorgebbaren Restdruckwert nicht unterschreitet, obwohl das Betätigungsglied (42) hinsichtlich seines Steuerdruckes derart angesteuert ist, dass es in eine dem ersten Verschlussglied (27) die Einnahme seiner Schließstellung ermöglichende Stellung umschaltbar oder umgeschaltet ist.

15. Verfahren nach Anspruch 14, **dadurch gekennzeichnet, dass** der am Sekundäranschluss (7) herrschende Sekundärdruck mittels einer zwei funktionell parallelgeschaltete Drucksensoren enthaltende Sekundärdruck-Sensoreinrichtung (63) überwacht wird.

## Claims

1. Pressure control device, comprising a pressure control valve (2) having a valve housing (5) with a primary port (6) for the supply of pressure fluid, a pressure-controlled secondary port (7) for connection to a load and a venting port (8), wherein a first overflow opening (23) framed by a first valve seat (25) is provided between the secondary port (7) and the primary port (6) and a second overflow opening (24) framed by a second valve seat (26) is provided between the secondary port (7) and the venting port (8), wherein opposite the first valve seat (25) there is provided a first closing member (27) resiliently preloaded towards a closed position in which it bears against the first valve seat (25) and opposite the second valve seat (26) there is provided a second closing member (28) resiliently preloaded towards a closed position in which it bears against the second valve seat (26), wherein the two closing members (27, 28) belong to a regulating unit (38) which is movable relative to the valve housing (5) and which further comprises an actuating member (42) which is movable relative to the two closing members (27, 28) and can be driven to perform a regulating movement (43) relative to the valve housing (5) by the influence of a control pressure, by which actuating member (42) each closing member (27, 28) can be moved into at least one open position raised off the associated valve seat (25, 26), **characterised in that** the regulating unit (38), in addition to the two closing members (27, 28), comprises a restrictor member (76) mounted in a stationary position on the actuating member (42) and joining its regulating movement (43), which restrictor member (76) adopts in a position of the actuating member (42), which allows the first closing member (27) to adopt its closed position, a restricting position which narrows the flow cross-section between the primary port (6) and the secondary port (7) to a restricted gap (77) when compared to the maximum open position of the first closing member (27) which can be caused by the actuating member (42).

2. Pressure control device according to claim 1, **characterised in that** the restrictor member (76) is arranged on the actuating member (42) in such a way that it lies completely outside the first overflow opening (23) in the position of the actuating member (42) which determines the open position of the first closing member (27) and dips at least partially and expediently completely into the first overflow opening (23) in the restricting position.

3. Pressure control device according to claim 1 or 2, **characterised in that** the restrictor member (76) is designed as an annular projection which radially projects from the actuating member (42).

4. Pressure control device according to any of claims 1 to 3, **characterised in that** the restrictor member (76) is an integral part of the actuating member (42).

5. Pressure control device according to any of claims 1 to 4, **characterised in that** the actuating member (42) comprises a stop member (54) which acts on the first closing member (27) in order to move the first closing member (27) into the open position and which expediently forms the restrictor member (76) at the same time.

6. Pressure control device according to any of claims 1 to 5, **characterised in that** the restrictor member (76) is designed such that, if the restricting position of the restrictor member (76) is adopted while the first closing member (27) is in its maximum open position and the second closing member (28) also is in an open position, the secondary pressure applied to the secondary port (7) has a positive pressure as a residual pressure value, which amounts to a maximum of 10% of the primary pressure value applied to the primary port, expediently not exceeding 1 bar.

7. Pressure control device according to any of claims 1 to 6, **characterised in that** it comprises an electronic control unit (58) which is designed for providing an electronic indicating signal if the actual value of the secondary pressure applied to the secondary port does not fall below a preset residual pressure value, although the actuating member (42) is subjected to a control pressure which corresponds to an atmospheric pressure level in particular and the level of which causes a switching of the actuating member (42) into a position which allows first closing member (27) to adopt its closed position.

8. Pressure control device according to any of claims 1 to 7, **characterised in that** it comprises a secondary pressure sensor device (63) which detects the secondary pressure applied to the secondary port (7), which is expediently connected to an electronic control unit (58) of the pressure control device (1) and which preferably comprises two pressure sensors which are functionally parallel-connected.

9. Pressure control device according to any of claims 1 to 8, **characterised in that** it comprises a primary pressure sensor device (64) which detects the primary pressure applied to the primary port (6) and which is expediently connected to an electronic control unit (58) of the pressure control device (1), which preferably contributes to the generation of the control pressure for the actuating member (42).

10. Pressure control device according to any of claims 1 to 9, **characterised in that** it comprises a pilot valve device (67) which provides the control pressure required for driving the actuating member (42) and which is expediently supplied with pressure fluid by the primary port (7).

11. Pressure control device according to claim 10, **characterised in that** the pressure control valve (2) comprises a drive chamber (52) which is bounded by a drive wall (47) drive-coupled to the actuating member (42) and which communicates with a control passage (53) supplying the control pressure, the pilot valve device (67) comprising a ventilating valve device (65) which is connected to the control passage (52) and electrically actuated and a venting valve device (66) which is independent of the ventilating valve device (65) and likewise connected to the control passage (52) and electrically actuated.

12. Pressure control device according to any of claims 1 to 11, **characterised in that** each closing member (27, 28) is assigned its own, preferably compressively acting, spring device (34, 35) for resiliently preloading it towards the closed position, which spring device (34, 35) acts together with the associated closing member (27, 28) on the one hand and with the valve housing (5) on the other hand.

13. Pressure control device according to any of claims 1 to 12, **characterised in that** the two valve seats (25, 26) are arranged coaxially at a distance from one another while pointing in opposite directions, wherein the preferably tappet- or rod-shaped actuating member (42) coaxially passes through both of the overflow openings (23, 24) and wherein the two closing members (27, 28) are arranged on the actuating member (42) in a way which allows their axial displacement independently of one another.

14. Method for operating a pressure control device according to any of claims 1 to 13, **characterised in that**, using an electronic control unit (58), a control pressure used for driving the actuating member (42) is generated on the basis of a preset or presettable secondary pressure set value and a secondary pressure actual value prevailing at the secondary port, wherein an electronic indicating signal is generated if the secondary pressure does not fall below a preset or presettable residual pressure value, although the actuating member (42) is in respect to its control pressure controlled such that it can be or is switched into a position which allows the first closing member (27) to adopt its closed position.

15. Method according to claim 14, **characterised in that** the secondary pressure prevailing at the secondary port (7) is monitored by means of a secondary pressure sensor device (63) which comprises two pressure sensors which are functionally parallel-connected.

## Revendications

1. Dispositif de régulation de pression, comprenant une soupape de régulation de pression (2), qui présente un carter de soupape (5), doté d'un raccordement primaire (6) faisant office d'amenée de moyen sous pression, d'un raccordement secondaire (7) à pression régulée servant au raccordement à un consommateur, et un raccordement d'aération (8), sachant qu'un premier orifice de déversement (23) encadré par un premier siège de soupape est disposé entre le raccordement secondaire (7) et le raccordement primaire (6) et qu'un deuxième orifice de déversement (24) encadré par un deuxième siège de soupape (26) est disposé entre le raccordement secondaire (7) et le raccordement d'aération (8), sachant qu'un premier organe d'obturation (27) précontraint de manière élastique en direction d'une position fermée située au niveau du premier siège de soupape (25) fait face au premier siège de soupape (25) et qu'un deuxième organe d'obturation (28) précontraint de manière élastique en direction d'une position fermée située au niveau du deuxième siège de soupape (26) fait face au deuxième siège de soupape (26), sachant que les deux organes d'obturation (27, 28) font partie d'une unité de régulation (38) mobile par rapport au carter de soupape (5), laquelle comporte en outre un organe d'actionnement (42) mobile par rapport aux deux organes d'obturation (27, 28) et pouvant être entraîné sous l'effet d'une pression de commande de manière à effectuer un mouvement de régulation (43) par rapport au carter de soupape (5), lequel organe d'actionnement permet de déplacer chaque organe d'obturation (27, 28) dans au moins une position ouverte soulevée par le siège de soupape (25, 26) associé, **caractérisé en ce que** l'unité de régulation (38) présente, en plus des deux organes d'obturation (27, 28), un organe d'étranglement (76) disposé de manière immobile au niveau de l'organe d'actionnement (42) et accompagnant le mouvement de régulation (43) de ce dernier, lequel organe d'étranglement adopte, lorsque l'organe d'actionnement (42) adopte une position permettant au premier organe d'obturation (27) de prendre sa position fermée, une position d'étranglement réduisant la section transversale d'écoulement à une fente d'étranglement (77) entre le raccordement primaire (6) et le raccordement secondaire (7) en comparaison avec la position ouverte maximale, pouvant être provoquée par l'organe d'actionnement (42), du premier organe d'obturation (27).

2. Dispositif de régulation de pression selon la revendication 1, **caractérisé en ce que** l'organe d'étranglement (76) est disposé au niveau de l'organe d'actionnement (42) de telle manière qu'il se trouve, lorsque l'organe d'actionnement (42) se trouve dans la position prédéfinissant la position ouverte du premier organe d'obturation (27), complètement en dehors du premier orifice de déversement (23) et qu'il s'enfonce, en position d'étranglement, au moins en partie et de manière appropriée complètement dans le premier orifice de déversement (23).

3. Dispositif de régulation de pression selon la revendication 1 ou 2, **caractérisé en ce que** l'organe d'étranglement (76) est réalisé sous la forme d'une partie annulaire faisant saillie dépassant radialement de l'organe d'actionnement (42).

4. Dispositif de régulation de pression selon l'une quelconque des revendications 1 à 3, **caractérisé en ce que** l'organe d'étranglement (76) est un composant d'un seul tenant de l'organe d'actionnement (42).

5. Dispositif de régulation de pression selon l'une quelconque des revendications 1 à 4, **caractérisé en ce que** l'organe d'actionnement (42) présente un organe de butée (54) agissant sur le premier organe d'obturation (27) aux fins du déplacement du premier organe d'obturation (27) dans la position ouverte, lequel organe de butée forme de manière appropriée par la même l'organe d'étranglement (76).

6. Dispositif de régulation de pression selon l'une quelconque des revendications 1 à 5, **caractérisé en ce que** l'organe d'étranglement (76) est réalisé de telle manière que, lorsque l'organe d'étranglement (76) adopte une position d'étranglement et que simultanément le premier organe d'obturation (27) se trouve dans la position ouverte maximale et que le deuxième organe d'obturation (28) adopte de la même manière une position ouverte, la pression secondaire appliquée au niveau du raccordement secondaire (7) présente une surpression comme valeur de pression résiduelle, qui est égale au maximum à 10 % de la valeur de la pression primaire régnant au niveau du raccordement primaire et ne dépasse pas dans ce cadre de manière appropriée 1 bar.

7. Dispositif de régulation de pression selon l'une quelconque des revendications 1 à 6, **caractérisé en ce qu'**il présente un dispositif de commande (58) électronique, qui est réalisé pour provoquer un signal de notification électrique lorsque la valeur réelle de la pression secondaire régnant au niveau du raccordement secondaire ne reste pas inférieure à une valeur de pression résiduelle prédéfinie, bien que l'organe d'actionnement (42) soit sollicité par une pression de commande en particulier de niveau atmosphérique, dont le niveau provoque un passage de l'organe d'actionnement (42) dans une position permettant au premier organe d'obturation (27) d'adopter sa position fermée.

8. Dispositif de régulation de pression selon l'une quelconque des pressions 1 à 7, **caractérisé en ce qu'**il présente un dispositif de capteur (63) de pression secondaire détectant la pression secondaire régnant au niveau du raccordement secondaire (7), lequel dispositif de capteur est raccordé de manière appropriée à un dispositif de commande (58) électronique du dispositif de régulation de pression (1) et comporte de préférence deux capteurs de pression branchés de manière fonctionnelle en parallèle.

9. Dispositif de régulation de pression selon l'une quelconque des revendications 1 à 8, **caractérisé en ce qu'**il présente un dispositif de capteur (64) de pression primaire détectant une pression primaire régnant au niveau du raccordement primaire (7), lequel dispositif de capteur de pression primaire est raccordé de manière appropriée à un dispositif de commande (58) électronique du dispositif de régulation de pression (1), avec le concours duquel de préférence la pression de commande est générée pour l'organe d'actionnement (42).

10. Dispositif de régulation de pression selon l'une quelconque des revendications 1 à 9, **caractérisé en ce qu'**il présente un dispositif de soupape de précommande (67), qui fournit la pression de commande requise pour entraîner l'organe d'actionnement (42) et qui est alimenté en milieu sous pression de manière appropriée par le raccordement primaire (7).

11. Dispositif de régulation de pression selon la revendication 10, **caractérisé en ce que** la soupape de régulation de pression (2) présente une chambre d'entraînement (52), qui est délimitée par une paroi d'entraînement (47) mobile couplée en entraînement à l'organe d'actionnement (42) et qui communique avec un canal de commande (53) amenant la pression de commande, sachant que le dispositif de soupape de précommande (67) présente un dispositif de soupape de ventilation (65) pouvant être actionné de manière électrique, raccordé au canal de commande (52) et en outre un dispositif de soupape d'aération (66) pouvant être actionné de manière électrique, indépendant du dispositif de soupape de ventilation (65) et raccordé de la même manière au canal de commande (52).

12. Dispositif de régulation de pression selon l'une quelconque des revendications 1 à 11, **caractérisé en ce qu'**un dispositif à ressorts (34, 35) propre agissant de préférence en exerçant une pression est associé à chaque organe d'obturation (27, 28) aux fins de la précontrainte par ressorts dans la position fermée, lequel dispositif à ressorts coopère d'une part avec l'organe d'obturation (27, 28) associé et d'autre part avec le carter de soupape (5).

13. Dispositif de régulation de pression selon l'une quelconque des revendications 1 à 12, **caractérisé en ce que** les deux sièges de soupape (25, 26) sont disposés l'un par rapport à l'autre de manière coaxiale à distance tout en étant dirigés dans des directions opposées, sachant que l'organe d'actionnement (42) réalisé de préférence de manière à présenter une forme de coulisseau ou de tige traverse de manière coaxiale les deux orifices de déversement (23, 24) et sachant que les deux organes d'obturation (27, 28) sont disposés sur l'organe d'actionnement (42) de manière à coulisser indépendamment l'un de l'autre de manière axiale.

14. Procédé servant à faire fonctionner un dispositif de régulation de pression selon l'une quelconque des revendications 1 à 13, **caractérisé en ce qu'**on génère une pression de commande utilisée pour entraîner l'organe d'actionnement (42) en utilisant un dispositif de commande (58) électronique sur la base d'une valeur de consigne de la pression secondaire définie ou pouvant être définie et sur la base d'une valeur réelle de la pression secondaire régnant au niveau du raccordement secondaire, sachant qu'un signal de notification électrique est généré lorsque la valeur de la pression secondaire n'est pas inférieure à une valeur de pression résiduelle prédéfinie ou pouvant être prédéfinie, bien que l'organe d'actionnement (42) soit commandé eu égard à sa pression de commande de telle manière qu'il peut passer ou qu'il passe dans une position permettant au premier d'obturation (27) d'adopter sa position fermée.

15. Procédé selon la revendication 14, **caractérisé en ce que** la pression secondaire régnant au niveau du raccordement secondaire (7) est surveillée au moyen d'un dispositif de détection (63) de pression secondaire comportant deux capteurs de pression branchés de manière fonctionnelle en parallèle.
